# FASCICULE DE BREVET EUROPEEN

(11) **EP 2 640 982 B1**
(45) Date de publication et mention de la délivrance du brevet: **24.05.2017**
(21) Numéro de dépôt: 11799758.5
(22) Date de dépôt: 08.11.2011
(51) Int. Cl.: F16B 2/18, F16B 7/14, A63B 63/08, B62K 19/32

(54) **DISPOSITIF DE SERRAGE, PAR EXEMPLE DE TYPE COLLIER DE SERRAGE**
SPANNVORRICHTUNG, Z.B. KLEMMRING
CLAMPING DEVICE, E.G. A CLAMPING COLLAR

(30) Priorité: 18.11.2010 FR 1004498
(43) Date de publication de la demande: 25.09.2013
(73) Titulaire: Decathlon, 59650 Villeneuve D'ascq (FR)
(72) Inventeur: BLANDIN, Stéphane, F-59260 Hellemmes (FR); BASSETTI, Pierre Louis, F-59710 Merignies (FR); CARRELET, Benoit, F-59000 Lille (FR)
(74) Mandataire: Balesta, Pierre
(86) Numéro de dépôt international: PCT/FR2011/052599
(87) Numéro de publication internationale: WO 2012/066215

(56) Documents cités:
- WO-A1-2010/016022
- DE-A1- 10 054 612
- DE-U1-202004 000 241
- GB-A- 1 596 268
- GB-A- 2 392 707
- US-A- 4 744 690
- US-A- 5 340 003
- US-A1- 2002 076 266
- US-A1- 2002 136 598

## Description

L'invention a pour objet un dispositif de serrage, par exemple de type collier de serrage, destiné notamment à serrer une tige dans un tube, trouvant par exemple application au serrage d'une tige de selle dans le tube de cadre d'une bicyclette. Les documents DE 20 2004 000 241 U et US2002/0076266 A décrivent tous deux des dispositifs de serrage selon le préambule de la revendication 1. L'invention a également pour objet un ensemble comprenant un élément à serrer, par exemple de type tube dans lequel est insérée une tige, dans lequel le serrage est assuré par un dispositif de serrage introduit ci-dessus.

Si l'on considère notamment l'application au serrage de la tige de selle dans le tube de cadre d'une bicyclette, on connaît déjà des dispositifs visant à appliquer une pression sur le tube en enserrant celui-ci dans un dispositif de type collier de serrage, ce tube venant à son tour exercer une pression sur la tige de selle pour la maintenir dans la position souhaitée, donc pour la maintenir à une hauteur souhaitée.

Lorsqu'un cycliste souhaite ajuster le réglage en hauteur de la tige de selle, il doit libérer la tige de selle du serrage dans le tube du cadre. Le serrage est généralement obtenu au moyen d'un collier de serrage qui peut être soit rapporté libre, soit rapporté soudé sur le tube du cadre qui vient accueillir la tige de selle.

Le collier de serrage comprend une vis de serrage qui peut être serrée au moyen d'un outil, ou au moyen d'un levier démultiplicateur permettant le serrage ou desserrage du collier par le cycliste sans outil.

Plus généralement, la même problématique se pose pour un utilisateur souhaitant par exemple ajuster le réglage en hauteur de la colonne de direction de la trottinette, ou encore d'un support télescopique quelconque tel qu'un poteau ou mât support réglable en hauteur pour un panier de basketball.

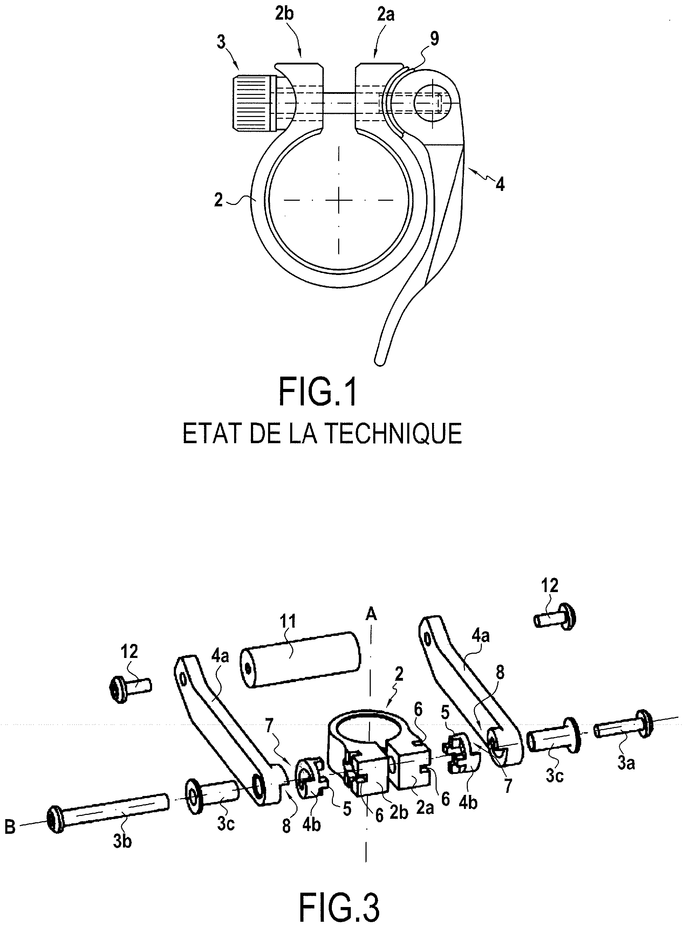

On connaît des dispositifs de serrage tels que représentés schématiquement à la figure 1. Un tel dispositif de serrage comprend un élément de serrage ou collier 2, dont les deux extrémités 2a, 2b sont reliées par un élément de jonction ou vis de serrage 3, et comprenant également un levier démultiplicateur 4.

Ce type de dispositif de serrage utilise un système à excentrique vertical autour d'un axe parallèle à la tige de selle. L'action sur le levier 4 autour de cet axe de rotation permet alors une mise en tension de la vis 3 ou une traction sur cette vis 3, correspondant à l'excentricité ramenée à la course du levier 4.

Le blocage du dispositif en position serrée est assuré par une réduction progressive du rayon en fin de course, permettant la création d'un point dur bloquant le dispositif.

Dans certains cas particuliers de dispositif, un pré-serrage avec outil, ou manuellement, peut être effectué au moyen de la tête de vis 3 à l'opposé du levier 4.

Une rondelle en matière plastique 9 permet d'assurer le bon serrage sans précontraintes parasites, ainsi qu'un coefficient de frottement permettant la manipulation sous un effort acceptable pour l'utilisateur.

Un des problèmes posés par ce type de dispositif de serrage est son manque d'ergonomie. La cinématique d'actionnement, consistant à actionner le bras ou levier 4 autour de son axe de rotation, ne permet pas d'avoir un levier de longueur importante. En effet, un levier de longueur importante dépasse, notamment en position de serrage, beaucoup trop du collier 2, et donc de l'élément à serrer. Cette proéminence est potentiellement dangereuse, notamment en utilisation pour le serrage d'une tige de selle dans le tube du cadre d'une bicyclette, car elle engendre des risques d'accrochage et de blessure.

Par conséquent la longueur du levier 4 doit être relativement réduite afin que celui-ci ne dépasse pas trop, ce qui impose des efforts importants sur une petite surface d'appui et rend le serrage et le desserrage difficiles. En effet, un levier trop court nécessite trop d'efforts de la part de l'utilisateur pour son actionnement.

De plus, il est souhaitable, dans certaines circonstances, de pouvoir actionner le dispositif de serrage alors que la bicyclette est déjà enfourchée. Or, l'actionnement latéral du dispositif de l'état de la technique présenté ci-dessus rend cette manipulation difficile lorsque la bicyclette est déjà enfourchée. L'ajustement doit donc se faire forcément avant de monter sur le vélo, et oblige l'utilisateur à désenfourcher puis à renfourcher la bicyclette s'il n'a pas procédé au réglage initialement.

On connaît également des dispositifs de serrage qui utilisent une vis de serrage actionnée autour d'un axe qui n'est pas parallèle à l'axe de la tige de la selle. De tels dispositifs sont décrits, par exemple, dans les documents US 5 340 003 et DE 20 2004 000 241. Un des problèmes posés par ce type de dispositif est, là encore, le manque d'ergonomie de ce type de dispositif de serrage, qui implique que des efforts importants soient déployés par l'utilisateur pour son actionnement.

L'invention a donc pour objet de résoudre les problèmes précités, parmi d'autres problèmes.

Le but visé par la présente invention est ainsi de proposer un dispositif de serrage qui soit plus facile à manipuler, en particulier lorsqu'il est utilisé pour serrer une tige de selle dans un tube de cadre de bicyclette.

L'invention se rapporte ainsi à un dispositif de serrage, par exemple de type collier de serrage, apte à entourer et serrer un élément à serrer.

Le dispositif comprend un élément de serrage destiné à enserrer l'élément à serrer autour d'un axe de serrage, l'élément de serrage présentant deux extrémités aptes à se rapprocher l'une de l'autre pour serrer l'élément à serrer.

De préférence, l'élément à serrer s'étend selon un axe confondu avec l'axe de serrage.

Dans l'exemple consistant à enserrer une tige de selle dans un tube de cadre de bicyclette, l'axe de serrage, au sens de l'invention, est confondu avec l'axe de la tige de la selle, lui-même confondu avec l'axe du tube de cadre de bicyclette.

Le dispositif comprend également un moyen de serrage lui-même comprenant un moyen d'actionnement monté en rotation autour d'un axe d'actionnement et un moyen de jonction reliant les deux extrémités de l'élément de serrage.

Ce moyen de serrage est apte à permettre le rapprochement des deux extrémités de l'élément de serrage selon l'axe d'actionnement, l'axe d'actionnement n'étant pas parallèle à l'axe de serrage.

Par ailleurs, le moyen d'actionnement comprend au moins un bras dont une extrémité est connectée à l'une des extrémités de l'élément de serrage par l'intermédiaire d'une came hélicoïdale.

Ainsi, l'actionnement du moyen de serrage se fait autour d'un axe d'actionnement qui est incliné par rapport à l'axe de serrage, de sorte que le moyen d'actionnement peut présenter une longueur importante, ce qui réduit les efforts d'actionnement nécessaires, tout en n'étant pas ou peu proéminent, en position de serrage, par rapport à l'élément à serrer, ce qui réduit les risques de blessures. La présence d'au moins un bras sur le moyen d'actionnement, connecté à l'une des extrémités de l'élément de serrage, permet de réduire l'effort déployé par l'utilisateur pour l'actionnement du dispositif de serrage.

Dans une première variante de réalisation, le pas de la came hélicoïdale est apte à permettre, lors de l'actionnement du moyen d'actionnement, une traction sur le moyen de jonction.

La came hélicoïdale présente une première face pourvue de moyens de blocage aptes à bloquer les mouvements de la came hélicoïdale par rapport à l'élément de serrage.

Les moyens de blocage peuvent comprendre au moins deux ergots.

Par ailleurs, l'extrémité de l'élément de serrage à laquelle le bras est connecté peut comprendre des logements destinés à coopérer avec les ergots.

La came hélicoïdale présente une deuxième face opposée à la première face, constituant une surface d'appui hélicoïdale.

Par ailleurs, l'extrémité du bras connectée à l'une des extrémités de l'élément de serrage présente une face constituant une surface d'appui hélicoïdale symétrique à, et destinée à coopérer avec, la surface d'appui hélicoïdale de la came hélicoïdale.

Dans une autre variante, éventuellement en combinaison avec la précédente, le moyen de jonction est de longueur réglable.

Ce moyen de jonction traverse le moyen d'actionnement et les extrémités de l'élément de serrage selon l'axe d'actionnement.

Le moyen de jonction peut comprendre un premier élément de jonction traversant au moins le bras d'actionnement et l'extrémité de l'élément de serrage à laquelle est connectée le bras d'actionnement, et un deuxième élément de jonction traversant au moins l'autre extrémité de l'élément de serrage et relié, par exemple par vissage, avec le premier élément de jonction.

Dans une autre variante, éventuellement en combinaison avec une ou plusieurs des précédentes, l'axe d'actionnement est perpendiculaire à l'axe de serrage.

L'invention se rapporte également, selon un deuxième aspect, à un ensemble télescopique comprenant au moins un élément à serrer, pourvu d'un dispositif de serrage tel que présenté ci-dessus.

L'ensemble peut comprendre une tige de selle de bicyclette, l'élément à serrer étant un tube de cadre de bicyclette destiné à recevoir cette tige de selle.

L'ensemble peut comprendre une tige, l'élément à serrer étant un tube destiné à recevoir cette tige, la tige et le tube formant tout ou partie d'une colonne de direction, par exemple pour une bicyclette ou une trottinette.

L'ensemble peut comprendre une tige, l'élément à serrer étant un tube destiné à recevoir cette tige, la tige et le tube formant tout ou partie d'un mât support, tel qu'un mât support pour un panier de basketball ou autres sports similaires.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figure 1 : représente schématiquement un exemple de dispositif de serrage selon l'état de la technique,
- figures 2a, 2b : représentent schématiquement un exemple de dispositif de serrage selon l'invention, respectivement en position verrouillée ou serrée et en position déverrouillée ou desserrée,
- figure 3 : représente schématiquement les détails d'un exemple de dispositif de serrage selon l'invention.

La figure 1 représente un dispositif de l'état de la technique et a été décrite plus haut.

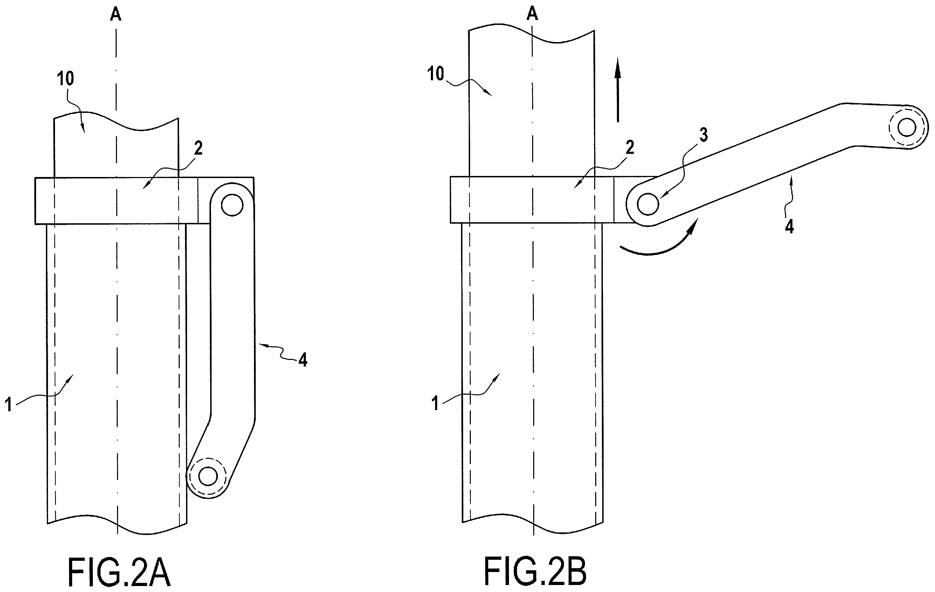

Les figures 2a, 2b représentent schématiquement un exemple de dispositif de serrage selon l'invention, respectivement en position serrée et desserrée.

Le dispositif de serrage comprend un élément de serrage 2 qui vient se positionner autour d'un élément à serrer 1 et qui enserre ce dernier autour d'un axe de serrage A.

Dans cet exemple, l'axe de serrage A est confondu avec l'axe de l'élément à serrer, la tige et l'élément à serrer étant eux-mêmes coaxiaux. Autrement dit, l'élément à serrer et l'axe de serrage sont coaxiaux.

L'élément à serrer 1 est tubulaire, et reçoit un élément 10 de type tige 10. En position desserrée, l'utilisateur peut ajuster le positionnement de la tige 10 dans le tube 1, puis bloquer la tige 10 dans la position souhaitée, c'est-à-dire à la hauteur souhaitée, en position serrée.

Le dispositif comprend un moyen de serrage 3, 4. Ce moyen de serrage 3, 4 comprend un moyen d'actionnement 4, par exemple de type levier ou bras 4, qui est monté en rotation autour d'un axe d'actionnement, et un moyen de jonction 3 qui relie les deux extrémités de l'élément de serrage 2, comme on le verra plus précisément en référence à la figure 3 plus loin.

Le moyen de serrage 3, comme on le verra plus précisément également en référence à la figure 3 plus loin, permet le rapprochement des deux extrémités de l'élément de serrage 2 l'une par rapport à l'autre, selon l'axe d'actionnement au sens de l'invention.

L'axe d'actionnement du moyen d'actionnement 4, dans cet exemple, est perpendiculaire à l'axe de serrage A.

La figure 3 représente donc schématiquement des détails de réalisation d'un autre exemple de dispositif de serrage selon l'invention, dans lequel on retrouve l'élément de serrage 2, de type collier de serrage 2, présentant deux extrémités 2a, 2b aptes à se rapprocher l'une de l'autre selon l'axe d'actionnement B au sens de l'invention, pour un serrage d'un élément à serrer (non représenté) autour de l'axe de serrage A.

Dans cet exemple non limitatif, le collier de serrage 2 est apte à recevoir un élément tubulaire, dont l'axe est confondu avec l'axe de serrage A.

Plus précisément, le dispositif utilise un système à cames hélicoïdales 4b coaxiales au moyen de jonction 3a, 3b. Les deux cames 4b sont symétriques et leur pas est conçu pour permettre une mise en tension du, ou une traction sur le, moyen de jonction 3a, 3b suffisante.

Dans cet exemple, le dispositif est composé d'un ensemble constitué de deux cames hélicoïdales ; on pourrait toutefois concevoir, sans sortir du cadre de la présente invention, un dispositif où seule une came comprendrait une surface d'appui hélicoïdale, et où donc seule une came serait conçue pour permettre une mise en tension du, ou une traction sur le, moyen de jonction 3a, 3b.

Le collier 2 peut être en matériau métallique.

Les cames 4b, solidaires du collier 2 et fixes par rapport à celui-ci, via des ergots 5 qui se logent dans des logements 6 dans les extrémités 2a, 2b du collier 2, peuvent être en matériau plastique ou tout matériau approprié permettant de garantir un bon coefficient de frottement et une altération moindre des états de surface des cames 4b.

Les cames 4b sont distinctes du collier 2.

Les leviers actionneurs 4a sont montés mobiles en rotation par rapport aux cames 4b qui restent fixes par rapport au collier 2.

On comprend donc que lors de l'actionnement du levier actionneur 4a, les surfaces d'appui 8 des leviers 4a, par contact avec les surfaces d'appui hélicoïdales des cames 4b, engagent les cames 4b tout en les poussant selon l'axe d'actionnement B, grâce à quoi les extrémités 2a, 2b sont rapprochées l'une de l'autre, permettant le serrage de l'élément à serrer.

Dans la variante de réalisation évoquée précédemment où seule une came comprendrait une surface d'appui hélicoïdale, seule l'une des extrémités 2a, 2b du collier serait mobile.

Les leviers 4a et les cames 4b forment ainsi un moyen d'actionnement 4 tel que présenté plus haut en référence aux figures 2a, 2b.

Ces leviers 4a sont reliés, par leurs extrémités respectives opposées aux extrémités par lesquelles ils sont reliés aux cames 4b, par une barre de liaison 11 et des vis d'assemblage 12.

Ces leviers 4a sont donc actionnables selon une cinématique de rotation autour d'un axe d'actionnement B transversal, c'est-à-dire un axe d'actionnement B qui n'est pas parallèle à l'axe de serrage A.

Dans l'exemple représenté à la figure 3, cet axe d'actionnement B est perpendiculaire à l'axe de serrage A.

Toujours selon cet exemple non limitatif, l'axe d'actionnement B au sens de l'invention est confondu avec l'axe du moyen de serrage 3, 4.

Ainsi, dans cet exemple, les leviers 4a sont actionnables selon un mouvement du haut vers le bas pour le serrage, et du bas vers le haut pour le desserrage.

Pour maintenir le contact entre les surfaces d'appui 8 sur les extrémités des leviers 4a reliées aux cames 4b, et les surfaces d'appui 7 sur les cames 4b qui sont symétriques aux surfaces d'appui 8 respectives, les rattrapages de jeu entre les cames 4b d'une part, et entre le collier 2 et l'élément à serrer d'autre part, sont obtenus via un système d'épaulements dans le collier 2 (non représentés à la figure 3) et de goujons 3c.

Par ailleurs, le moyen de jonction 3 présenté plus haut en référence aux figures 2a, 2b, comprend dans cet exemple de la figure 3 une vis 3a vissée dans une vis creuse filetée 3b.

Dans cet exemple non limitatif, l'axe d'actionnement B au sens de l'invention est confondu avec l'axe des vis 3a, 3b.

Le bras de levier ainsi généré permet donc la transmission d'efforts importants, et la cinématique d'actionnement permet l'ajustement de la hauteur d'une tige de selle après l'enfourchement de la bicyclette, avec une manipulation plus intuitive.

Le dispositif permet aussi d'effectuer un préréglage en usine et, par adjonction de frein-filet, d'assurer une reproductibilité du serrage dans le temps.

L'ensemble de la description ci-dessus est donné à titre d'exemple, et n'est donc pas limitatif de l'invention.

En particulier, l'invention ne se limite pas à un axe d'actionnement B perpendiculaire à l'axe de serrage A, pour autant qu'il existe un certain degré d'inclinaison entre ces deux axes, ce qui permet de réduire, voire de supprimer dans le cas de deux axes perpendiculaires, le dépassement ou la proéminence du moyen d'actionnement 4, notamment en position serrée, et ce qui permet d'augmenter la longueur du levier d'actionnement et donc de réduire la force d'actionnement requise.

Par ailleurs, l'invention ne se limite pas à un dispositif comprenant un moyen d'actionnement 4 à deux leviers 4a et deux cames 4b. Un seul levier 4a et une seule came 4b, au niveau de l'une des extrémités 2a, 2b de l'élément de serrage 2, pourraient suffire. Bien sûr, l'efficacité du serrage est renforcée lorsqu'un levier 4a et une came 4b sont associés à chaque extrémité 2a, 2b de l'élément de serrage 2.

## Revendications

1. Dispositif de serrage, par exemple de type collier de serrage, apte à entourer et serrer un élément à serrer (1), comprenant un élément de serrage (2) destiné à enserrer ledit élément à serrer (1) autour d'un axe de serrage (A) et présentant deux extrémités (2a, 2b) aptes à se rapprocher l'une de l'autre pour serrer ledit élément à serrer (1), et un moyen de serrage (3, 4) comprenant un moyen d'actionnement (4) monté en rotation autour d'un axe d'actionnement (B) et un moyen de jonction (3) reliant les deux extrémités (2a, 2b) de l'élément de serrage (2), ledit moyen de serrage (3, 4) étant apte à permettre le rapprochement des deux extrémités (2a, 2b) de l'élément de serrage (2) selon l'axe d'actionnement (B), l'axe d'actionnement (B) n'étant pas parallèle à l'axe de serrage (A), ledit dispositif de serrage étant **caractérisé en ce que** le moyen d'actionnement (4) comprend au moins un bras (4a) dont une extrémité est connectée à l'une des extrémités (2a, 2b) de l'élément de serrage (2) par l'intermédiaire d'une came hélicoïdale (4b), ladite came hélicoïdale étant distincte du bras du moyen d'actionnement et de ladite extrémité de l'élément de serrage, ladite extrémité du bras (4a) présentant une face constituant une surface d'appui hélicoïdale symétrique à, et destinée à coopérer avec, une surface d'appui hélicoïdale (7) de la came hélicoïdale (4b).

2. Dispositif selon la revendication **1**, **caractérisé en ce que** le pas de la came hélicoïdale (4b) est apte à permettre, lors de l'actionnement du moyen d'actionnement (4), une traction sur le moyen de jonction (3).

3. Dispositif selon la revendication **2**, **caractérisé en ce que** la came hélicoïdale (4b) présente une première face pourvue de moyens de blocage (5) aptes à bloquer les mouvements de la came hélicoïdale (4b) par rapport à l'élément de serrage (2).

4. Dispositif selon la revendication **3**, **caractérisé en ce que** les moyens de blocage (5) comprennent au moins deux ergots (5).

5. Dispositif selon la revendication **4**, **caractérisé en ce que** l'extrémité (2a, 2b) de l'élément de serrage (2) à laquelle le bras (4a) est connecté comprend des logements (6) destinés à coopérer avec les ergots (5).

6. Dispositif selon l'une quelconque des revendications **3 à 5**, **caractérisé en ce que** la came hélicoïdale (4b) présente une deuxième face opposée à la première face, constituant la surface d'appui hélicoïdale (7) de la came hélicoïdale.

7. Dispositif selon l'une quelconque des revendications **1 à 6**, **caractérisé en ce que** le moyen de jonction (3) est de longueur réglable.

8. Dispositif selon la revendication **7**, **caractérisé en ce que** le moyen de jonction (3) traverse le moyen d'actionnement (4) et les extrémités (2a, 2b) de l'élément de serrage (2) selon l'axe d'actionnement (B).

9. Dispositif selon l'une quelconque des revendications **7** et **8**, **caractérisé en ce que** le moyen de jonction (3) comprend un premier élément de jonction (3a) traversant au moins le bras (4a) et l'extrémité (2a, 2b) de l'élément de serrage (2) à laquelle est connecté ledit bras d'actionnement (4), et un deuxième élément de jonction (3b) traversant au moins l'autre extrémité (2b, 2a) de l'élément de serrage (2) et relié, par exemple par vissage, avec le premier élément de jonction (3a).

10. Dispositif selon l'une quelconque des revendications **1 à 9**, **caractérisé en ce que** l'axe d'actionnement (B) est perpendiculaire à l'axe de serrage (A).

11. Ensemble télescopique comprenant au moins un élément à serrer (2), **caractérisé en ce qu'**il est pourvu d'un dispositif de serrage selon l'une quelconque des revendications **1 à 10**.

12. Ensemble selon la revendication **11**, **caractérisé en ce qu'**il comprend une tige de selle (10) de bicyclette, et **en ce que** l'élément à serrer (2) est un tube de cadre (2) de bicyclette destiné à recevoir ladite tige de selle (10).

13. Ensemble selon la revendication **11**, **caractérisé en ce qu'**il comprend une tige (10) et **en ce que** l'élément à serrer (2) est un tube (2) destiné à recevoir ladite tige (10), ladite tige (10) et ledit tube (2) formant tout ou partie d'une colonne de direction, par exemple pour une bicyclette ou une trottinette.

14. Ensemble selon la revendication **11**, **caractérisé en ce qu'**il comprend une tige (10) et **en ce que** l'élément à serrer (2) est un tube (2) destiné à recevoir ladite tige (10), ladite tige (10) et ledit tube (2) formant tout ou partie d'un mât support, tel qu'un mât support pour un panier de basketball ou autres sports similaires.

## Patentansprüche

1. Spannvorrichtung, beispielsweise vom Typ des Spannrings, die geeignet ist, ein einzuspannendes Element (1) zu umgeben und festzuspannen, umfassend ein Spannelement (2), das dazu bestimmt ist, das einzuspannende Element (1) um eine Spannachse (A) einzuspannen und das zwei Enden (2a, 2b) aufweist, die geeignet sind, sich einander anzunähern, um das einzuspannende Element (1) festzuspannen, und ein Spannmittel (3, 4), das ein Betätigungsmittel (4) aufweist, das drehbar um eine Betätigungsachse (B) befestigt ist, und ein Verbindungsmittel (3), das die zwei Enden (2a, 2b) des Spannelements (2) verbindet, wobei das Spannmittel (3, 4) geeignet ist, das Annähern der zwei Enden (2a, 2b) des Spannelements (2) entlang der Betätigungsachse (B) zu ermöglichen, wobei die Betätigungsachse (B) nicht parallel zu der Spannachse (A) ist, wobei die Spannvorrichtung **dadurch gekennzeichnet ist, dass** das Betätigungsmittel (4) mindestens einen Arm (4a) aufweist, wovon ein Ende mit einem der Enden (2a, 2b) des Spannelementes (2) durch einen spiralförmigen Nocken (4b) verbunden ist, wobei der spiralförmige Nocken von dem Arm des Betätigungsmittels und dem Ende des Spannelementes getrennt ist, wobei das Ende des Armes (4a) eine Fläche aufweist, die eine spiralförmige Auflagefläche bildet, die symmetrisch zu einer spiralförmigen Auflagefläche (7) des spiralförmigen Nockens (4b) ist und dazu bestimmt ist, damit zusammenwirken.

2. Vorrichtung nach Anspruch 1, **dadurch gekennzeichnet, dass** die Steigung des spiralförmigen Nockens (4b) geeignet ist, bei Betätigen des Betätigungsmittels (4), einen Zug auf das Verbindungsmittel (3) zu ermöglichen.

3. Vorrichtung nach Anspruch 2, **dadurch gekennzeichnet, dass** der spiralförmige Nocken (4b) eine erste Fläche aufweist, die mit Blockiermitteln (5) versehen ist, die geeignet sind, die Bewegungen des spiralförmigen Nockens (4b) in Bezug auf das Spannelement (2) zu blockieren.

4. Vorrichtung nach Anspruch 3, **dadurch gekennzeichnet, dass** die Blockiermittel (5) mindestens zwei Sporne (5) aufweisen.

5. Vorrichtung nach Anspruch 4, **dadurch gekennzeichnet, dass** das Ende (2a, 2b) des Spannelements (2), mit dem der Arm (4a) verbunden ist, Aufnahmen (6) aufweist, die dazu bestimmt sind, mit den Spornen (5) zusammenzuwirken.

6. Vorrichtung nach einem der Ansprüche 3 bis 5, **dadurch gekennzeichnet, dass** der spiralförmige Nocken (4b) eine zweite Fläche aufweist, die der ersten Fläche gegenüberliegt, die die spiralförmige Auflagefläche (7) des spiralförmige Nockens bildet.

7. Vorrichtung nach einem der Ansprüche 1 bis 6, **dadurch gekennzeichnet, dass** das Verbindungsmittel (3) von einstellbarer Länge ist.

8. Vorrichtung nach Anspruch 7, **dadurch gekennzeichnet, dass** das Verbindungsmittel (3) das Betätigungsmittel (4) und die Enden (2a, 2b) des Spannelements (2) entlang der Betätigungsachse (B) durchquert.

9. Vorrichtung nach einem der Ansprüche 7 und 8, **dadurch gekennzeichnet, dass** das Verbindungsmittel (3) ein erstes Verbindungselement (3a), das mindestens den Arm (4a) und das Ende (2a, 2b) des Spannelements (2) durchquert, mit dem der Betätigungsarm (4) verbunden ist, und ein zweites Verbindungselement (3b) aufweist, das mindestens das andere Ende (2b, 2a) des Spannelements (2) durchquert und beispielsweise durch Verschraubung mit dem ersten Verbindungselement (3a) verbunden ist.

10. Vorrichtung nach einem der Ansprüche 1 bis 9, **dadurch gekennzeichnet, dass** die Betätigungsachse (B) senkrecht zu der Spannachse (A) ist.

11. Teleskopische Anordnung, umfassend mindestens ein einzuspannendes Element (2), **dadurch gekennzeichnet, dass** sie mit einer Spannvorrichtung nach einem der Ansprüche 1 bis 10 versehen ist.

12. Anordnung nach Anspruch 11, **dadurch gekennzeichnet, dass** sie eine Sattelstange (10) eines Fahrrads aufweist und dass das einzuspannende Element (2) ein Rahmenrohr (2) eines Fahrrads ist, das dazu bestimmt ist, die Sattelstange (10) aufzunehmen.

13. Anordnung nach Anspruch 11, **dadurch gekennzeichnet, dass** sie eine Stange (10) aufweist, und dass das einzuspannende Element (2) ein Rohr (2) ist, das dazu bestimmt ist, die Stange (10) aufzunehmen, wobei die Stange (10) und das Rohr (2) die ganze oder einen Teil einer Lenksäule bilden, beispielsweise für ein Fahrrad oder einen Roller.

14. Anordnung nach Anspruch 11, **dadurch gekennzeichnet, dass** sie eine Stange (10) aufweist und dass das einzuspannende Element (2) ein Rohr (2) ist, das dazu bestimmt ist, die Stange (10) aufzunehmen, wobei die Stange (10) und das Rohr (2) den ganzen oder einen Teil eines Tragmasts bilden, wie ein Tragmast für einen Basketballkorb oder andere ähnliche Sportarten.

## Claims

1. A clamping device, e.g. of the clamping collar type, suitable for surrounding and clamping an element to be clamped (1), said clamping device comprising a clamping element (2) that is designed to grasp said element to be clamped (1) about a clamping axis (A), and that has two ends (2a, 2b) suitable for coming closer together in order to clamp said element to be clamped (1), and tightening means (3, 4) comprising actuator means (4) mounted to pivot about an actuating axis (B) and junction means (3) for connecting together the two ends (2a, 2b) of the clamping element (2), said tightening means (3, 4) being suitable for enabling the two ends (2a, 2b) of the clamping element (2) to come closer together along the actuating axis (B), the actuating axis (B) not being parallel to the clamping axis (A), said clamping device being **characterized in that** the actuator means (4) comprise at least one arm (4a) having an end connected to one of the ends (2a, 2b) of the clamping element (2) via a helical cam (4b), said helical cam being distinct from the arm of the actuator means and from the said end of the clamping element, said end of the arm (4a) has a face constituting a helical bearing surface (8) that is symmetrical to and designed to co-operate with a helical bearing surface (7) of the helical cam (4b).

2. A device according to claim 1, **characterized in that** the pitch of the helical cam (4b) is suitable for enabling traction to be applied to the junction means (3) when the actuator means (4) are actuated.

3. A device according to claim 2, **characterized in that** the helical cam (4b) has a first face provided with locking means (5) suitable for locking movement of the helical cam (4b) relative to the clamping element (2).

4. A device according to claim 3, **characterized in that** the locking means (5) comprise at least two lugs (5).

5. A device according to claim 4, **characterized in that** the end (2a, 2b) of the clamping element (2) to which the arm (4a) is connected is provided with recesses (6) designed to co-operate with the lugs (5).

6. A device according to any one of claims 3 to 5, **characterized in that** the helical cam (4b) has a second face opposite from the first face, and constituting a helical bearing surface (7) of the helical cam.

7. A device according to any one of claims 1 to 6, **characterized in that** the junction means (3) are of adjustable length.

8. A device according to claim 7, **characterized in that** the junction means (3) pass through the actuator means (4) and through the ends (2a, 2b) of the clamping element (2) along the actuating axis (B).

9. A device according to any one of claims 7 and 8, **characterized in that** the junction means (3) comprise a first junction element (3a) passing through at least the arm (4a) and the end (2a, 2b) of the clamping element (2) to which said actuator arm (4) is connected, and a second junction element (3b) passing through at least the other end (2a, 2b) of the clamping element (2) and connected, e.g. by screw-fastening, to the first junction element (3a).

10. A device according to any one of claims 1 to 9, **characterized in that** the actuating axis (B) is perpendicular to the clamping axis (A).

11. A telescopic assembly including at least one element to be clamped (2), **characterized in that** it is provided with a clamping device according to any one of claims 1 to 10.

12. An assembly according to claim 11, **characterized in that** it includes a bicycle saddle post (10), and **in that** the element to be clamped (2) is a bicycle frame tube (2) that is designed to receive said saddle post (10).

13. An assembly according to claim 11, **characterized in that** it includes a post (10), and **in that** the element to be clamped (2) is a tube (2) designed to receive said post (10), said post (10) and said tube (2) forming all or some part of a steering column, e.g. for a bicycle or for a kick scooter.

14. An assembly according to claim 11, **characterized in that** it includes a post (10), and **in that** the element to be clamped (2) is a tube (2) designed to receive said post (10), said post (10) and said tube (2) forming all or some part of a support pole, such as a support pole for a basketball basket or for some other similar item of sports equipment.
